# EUROPÄISCHE PATENTSCHRIFT

(11) **EP 0 878 276 B1**
(45) Veröffentlichungstag und Bekanntmachung des Hinweises auf die Patenterteilung: **05.12.2001**
(21) Anmeldenummer: 98250159.5
(22) Anmeldetag: 12.05.1998
(51) Int. Cl.: B26D 7/18, B26D 7/08

(54) **Beölungseinrichtung für Gattermesser einer Brotschneidemaschine**
Lubricating device for the grid cutter of a bread slicing machine
Dispositif pour lubrifier les couteaux de la grille d'une machine à débiter le pain en tranches

(30) Priorität: 13.05.1997 DE 19721051
(43) Veröffentlichungstag der Anmeldung: 18.11.1998
(73) Patentinhaber: WABÄMA GMBH, SPEZIALFABRIK FÜR SCHNEIDEMASCHINEN, D-42781 Haan (DE)
(72) Erfinder: Warnke, Thomas, 42719 Solingen (DE)
(74) Vertreter: COHAUSZ HANNIG DAWIDOWICZ & PARTNER

(56) Entgegenhaltungen:
- DE-A- 4 437 625
- DE-U- 29 613 297
- US-A- 2 526 779

## Beschreibung

Die Erfindung betrifft eine Beölungseinrichtung für Gattermesser einer Brotschneidemaschine, die in einem Gatterrahmen parallel zueinander angeordnet sind, mit einer den Messern zuordenbaren Ölkammer und einem mit dieser Kammer verbundenen Filz für die Ölung der Messer, wobei der Filz in den Räumen zwischen den Messern an ordenbar ist (siche Prospekt Frischbrot-Gatter, WABÄMA GmbH, 1987 oder DE 44 37 625 A1).

Bekannte Gatter-Brotschneidemaschinen (Prospekt Frischbrot-Gatter der Wabäma GmbH, 1987) setzen Ölkammern mit integrierter Filzplatte zum Ölen der Gattermesser ein. An dem Filz und zum Teil auch an den Messern entsteht sogenannter Brotstein, der sich beim Brotschneiden durch normalen Verschleiß aber auch insbesondere beim Schneiden von sehr warmen Brot bildet.

Der Verschleiß und Brotstein erfordert das oftmalige Wechseln des Filzes und das Reinigen, das bedingt durch die Integration der Filzplatte verhältnismäßig aufwendig ist. Meist unterbleibt dann dieses aus Zeitgründen. Erhöhter Verschleiß bzw. Fehlfunktionen an Messern und Filz sind die Folge.

Bei diesem Stand der Technik liegt der Erfindung die Aufgabe zugrunde, die Beölungseinrichtung der eingangs genannten Art derart zu verbessern, daß das Wechseln des Filzes und die Reinigung unter gleichzeitiger Erhöhung des Wartungs- und Bedienkomforts vereinfacht wird.

Diese Aufgabe wird erfindungsgemäß dadurch gelöst, daß die Ölkammer an ihrer den Messern zuwendbaren vorderen oder hinteren Frontfläche im jeweiligen Schnittstärkenabstand senkrecht aufragende, in die Zwischenräume der Messer hineinragende Öldurchlaßröhrchen aufweist, auf denen fingerförmige Filzhütchen zur Aufnahme von Öl auswechselbar aufgeschoben angeordnet sind.

In einem weiteren bevorzugten Merkmal der erfindungsgemäßen Beölungseinrichtung weist die Ölkammer an ihrer den Messern abgewandten Frontfläche Befestigungsflansche mit Langlöchern aufweist.
Die Ölkammer wird am Rahmen der Gatter-Brotschneidemaschine in ihrem vorderen Bereich verschraubt, so die gesamte Einheit problemlos ausgetauscht werden kann.

In weiterer Ausgestaltung der Erfindung ist die Ölkammer durch eine lösbare Ölverschraubung mit einer Ölzufuhrleitung verbunden, über die die Kammer mit Öl versorgt wird.

Die Ölverschraubung ist nach einem weiteren Merkmal der Erfindung mittig in der abgewandten Frontfläche der Kammer angeordnet.

Ein bevorzugtes weiteres Merkmal sieht weiterhin vor, daß die Öldurchlaßröhrchen an der den Messern zugewandten Frontfläche mit Ansatzschrauben befestigt sind.

Von Vorteil ist es ferner, daß die Ölkammer im vorderen Bereich der Gattermaschine zugriffsfrei montierbar ist, so daß beim Abziehen der Filzhütchen nicht in den Messerbereich gegriffen werden muß. Ebenso gehört es aber auch zu der Erfindung, wenn die Ölkammer im rückwärtigen Bereich der Gattermaschine montierbar ist. Dann werden die verschlissenen Filzhütchen bequem mit einem Zusatzwerkzeug abgezogen und durch neue Filzhütchen ersetzt.

Die erfindungsgemäße Beölungseinrichtung ermöglicht es, den Filz messerbezogen in Abhängigkeit vom Verschleiß auszutauschen, ohne daß die gesamte Ölkammer demontiert werden muß. Der Austausch verursacht keinen nennenswerten Aufwand. Das verschlissene und/oder verschmutzte Filzhütchen wird nur von Öldurchlaßröhrchen abgezogen und ein neues Filzhütchen aufgezogen. Der Filzverbrauch sinkt und eine effiziente hygienische Handhabung wird erreicht.
Auch der Austausch der gesamten Ölkammer ist einfach und montagefreundlich. Es müssen nur die Befestigungsschrauben von den Befestigungsflanschen gelöst werden. Die gesamte Einheit ist so demontierbar.

Weitere Vorteile und Einzelheiten ergeben sich aus der nachfolgenden Beschreibung unter Bezugnahme auf die beigefügten Zeichnungen.

Die Erfindung soll nachstehend an einem Ausführungsbeispiel näher erläutert werden.

Es zeigen:

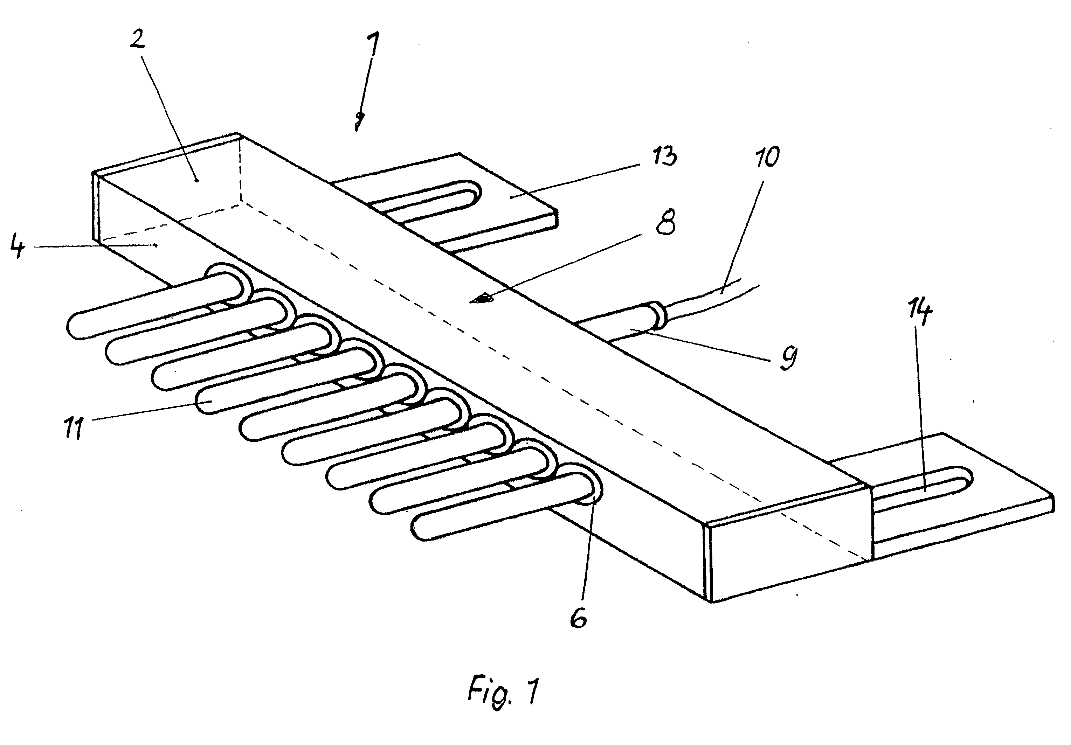

- Fig. 1: eine perspektivische Ansicht der erfindungsgemäßen Beölungseinrichtung und

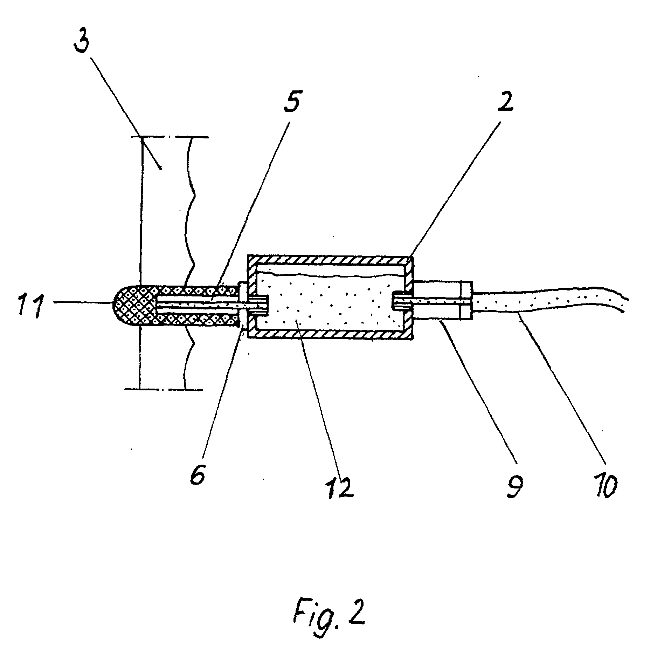

- Fig. 2: einen Schnitt entlang der Linie A-A gemäß Fig. 1.

Die erfindungsgemäße Beölungseinrichtung **1** besteht aus einer flachen kastenförmigen Ölkammer **2**. An der den Gattermessern **3** zugewandten Frontfläche **4** der Ölkammer **2** sind Öldurchlaßröhrchen **5** im Schnittstärkenabstand **B** aufragend eingesetzt. Die Öldurchlaßröhrchen **5** sind einerends als Ansatzschrauben **6** ausgebildet, die in entsprechende mit Innengewinde versehene Bohrungen **7** der Frontfläche **4** eingeschraubt sind.
An der den Gattermessern **3** abgewandten Frontfläche **8** der Ölkammer **2** befindet sich eine Ölverschraubung **9**, die mit der Ölzufuhrleitung **10** verbunden ist.
Auf die Öldurchlaßröhrchen **5** sind fingerförmige Filzhütchen **11** aufgeschoben.

An der hinteren Frontfläche Das in der Ölkammer **2** befindliche Öl **12** gelangt durch die zentrale Bohrung der Öldurchlaßröhrchen **5** auf die Spitze der Filzhütchen **11** und tränkt diese.
Die Öldurchlaßröhrchen **5** ragen mit ihren ölgetränkten Filzhütchen **11** in die Zwischenräume der Gattermesser **3** hinein und ölen die Messer **3**.

An der hinteren Frontfläche **8** der Ölkammer **2** sind Befestigungsflansche **13** angebracht. Die Befestigungsflansche **13** haben Langlöcher **14**, mit deren Hilfe die gesamte Beölungseinrichtung im vorderen Teil der Gatter-Brotschneidemaschine montiert wird.

### Aufstellung der verwendeten Bezugszeichen

- Beölungseinrichtung: 1
- Ölkammer: 2
- Gattermesser: 3
- vordere Frontfläche: 4
- Öldurchlaßröhrchen: 5
- Ansatzschrauben: 6
- Bohrungen: 7
- hintere Frontfläche: 8
- Ölverschraubung: 9
- Ölzuführleitung: 10
- Filzhütchen: 11
- Öl: 12
- Befestigungsflasch: 13
- Langlöcher: 14

## Patentansprüche

1. Beölungseinrichtung **(1)** für Gattermesser einer Brotschneidemaschine, die in einem Gatterrahmen parallel zueinander angeordnet sind, mit einer den Messern **(3)** zuordenbaren Ölkammer **(2)** und einem mit dieser Kammer **(2)** verbundenen Filz **(11)** für die Ölung der Messer **(3)**, wobei der Filz **(11)** in den Räumen zwischen den Messern **(3)** anordenbar ist,
**dadurch g e k e n n z e i c h n e t,**
daß die Ölkammer **(2)** an ihrer den Messern **(3)** zuwendbaren vorderen oder hinteren Frontfläche **(4;8)** im jeweiligen Schnittstärkenabstand **(B)** senkrecht aufragende, in die Zwischenräume hineinragende Öldurchlaßröhrchen **(5)** aufweist, auf denen fingerförmige Filzhütchen **(11)** zur Aufnahme von Öl **(12)** auswechselbar aufgeschoben angeordnet sind.

2. Beölungseinrichtung nach Anspruch 1,
**dadurch gekennzeichnet, daß** die Ölkammer **(2)** an ihrer den Messern **(3)** abgewandten Frontfläche **(8)** Befestigungsflansche **(13)** mit Langlöchern **(14)** aufweist.

3. Beölungseinrichtung nach Anspruch 1,
**dadurch gekennzeichnet, daß** mindestens eine Ölzufuhrleitung **(10)** mit der Ölkammer **(2)** durch je eine lösbare Ölverschraubung **(9)** verbunden ist.

4. Beölungseinrichtung nach Anspruch 3,
**dadurch gekennzeichnet, daß** die Ölverschraubung **(9)** mittig in der abgewandten Frontfläche **(8)** angeordnet ist.

5. Beölungseinrichtung nach Anspruch 1,
**dadurch gekennzeichnet, daß** die Öldurchlaßröhrchen **(5)** mittels Ansatzschrauben **(6)** an der Frontfläche **(4)** befestigt sind.

6. Beölungseinrichtung nach Anspruch 1 bis 5,
**dadurch gekennzeichnet, daß** die Ölkammer **(2)** im vorderen Bereich der Gattermaschine zugriffsfrei montierbar ist.

7. Beölungseinrichtung nach Anspruch 1 bis 5,
**dadurch gekennzeichnet, daß** die Ölkammer **(2)** im rückwärtigen Bereich der Gattermaschine montierbar ist.

## Claims

1. Lubrification device (1) for a multiple blades knife of a bread slicer, the blades being disposed parallel to each other in a multiple blades frame with an oil chamber (2) conjugated to the blades (3), and a felt (11) connected to the chamber (2) for the lubrification of the blades (3), so that the felt (2) is arrangeable in the zones between the blades (3), **characterized in that,** that the oil chamber (2) shows at its front or back front surfaces (4;8) conjugated to the blades (3) oil flowing tubules (5) that lift perpendicular with its correspondent distance (B) of the width of cut entering the intermediate zones, said oil flowing tubules (5) showing felt caps (11) with fingerform for admission of oil (12) that are placed sliding and replaceable on said oil flowing tubules.

2. Lubrification device according to claim 1, **characterized in that,** the oil chamber (2) shows at its front surface (8) opposite to the blades (3), mounting flanges (13) with ablong holes (14).

3. Lubrification device according to claim 1, **chararcterized in that,** at least one oil supply conduit (10) is connected to the oil chamber (2) through a disconnectable oil screwing (9) corresponding to each conduit.

4. Lubrification device according to claim 3, **characterized in that,** the oil screwing (9) is placed centered in the opposite front surface (8).

5. Lubrification device according to claim 1, **characterized in that,** the oil flowing tubules (5) are fixed on the front surface (4) through screws (6) with shoulders.

6. Lubrification device according to claim 1 to 5, **characterized in that,** the oil chamber (2) is mountable for a free grasp in the front area of the multiple blades machine.

7. Lubrification device according to claim 1 to 5, **characterized in that,** the oil chamber (2) is mountable in the back area of the multiple blades machine.

## Revendications

1. Dispositif de lubrification (1) pour couteau à plusieurs lames d'une machine à découper du pain, qui sont disposées paralleles respectivament dans un cadre à plusieurs lames avec une chambre d'oeil (2) arrangeable aux lames (3) et un feutre (11) engagé avec cette chambre pour la lubrification du couteau, de sorte que le feutre (11) peut être placé dans les spaces entre les lames (3),
**caractérisé en ce que,**
la chambre d'oeil (2) présente a ses surfaces frontales antérieures ou derrières (4; 8) qui peuvent être tournées vers les lames, des petites tubes pour le passage de l'oeil (5), qui s'élevent perpendiculairement avec la distance de force de coupe (B) correspondante, entrant dans les spaces intermédiaires et montrant des chapeaux du feutre (11) avec la forme de doigts pour l'admission d'oeil (12) qui sont placés coulissantes et échangeables sur lesdits petits tubes.

2. Dispositif de lubrification selon la revendication **1**
**caractérisé en ce que,** la chambre d'oeil (2) présente à son surface frontale (8) opposée aux lames (3), brides de fixation (13) avec des trous oblongs (14).

3. Dispositif de lubrification selon la revendication **1,**
**caractérisé en ce que,** au moins une conduite d'alimentation (10) est engagée avec la chambre d'oeil (2) par des vissages d'oeil démontables (9) qui se correspondent avec chaque conduite.

4. Dispositif de lubrification selon la revendication **3,**
**caractérisé en ce que,** la vissage d'oeil (9) est placé centré dans la surface frontale opposée (8).

5. Dispositif de lubrification selon la revendication **1**,
**caractérisé en ce que,** les petits tubes (5) sont fixés à la surface frontale (4) par des visses à téton (6).

6. Dispositif de lubrification selon la revendication **1** jusqu'a **5,**
**caractérisé en ce que,** la chambre d'oeil (2) peut être montée accesible au space anterièur de la machine à plusieurs lames.

7. Dispositif de lubrification selon la revendication **1** jusqu'a **5,**
**caractérisé en ce que,** la chambre d'oeil (2) peut être montée au space derrière de la machine à plusieurs lames.
